# EUROPÄISCHE PATENTSCHRIFT

(11) **EP 4 066 353 B1**
(45) Veröffentlichungstag und Bekanntmachung des Hinweises auf die Patenterteilung: **15.11.2023**
(21) Anmeldenummer: 21701911.6
(22) Anmeldetag: 13.01.2021
(51) Int. Cl.: H02K 1/04, H01F 41/12, H02K 15/12, H02K 3/38, H02K 5/08

(54) **VERFAHREN ZUM IMPRÄGNIEREN, VERFESTIGEN ODER ELEKTROISOLIEREN EINES EIN- ODER MEHRLAGIGE WICKLUNGEN TRAGENDEN KÖRPERS**
METHOD FOR IMPREGNATING, REINFORCING OR ELECTRICALLY INSULATING A BODY CARRYING SINGLE-LAYER OR MULTILAYER WINDINGS
PROCÉDÉ D'IMPRÉGNATION, DE RENFORCEMENT OU D'ÉLECTROISOLATION D'UN CORPS PORTANT DES ENROULEMENTS MONO- OU MULTICOUCHE

(30) Priorität: 25.02.2020 EP 20159310
(43) Veröffentlichungstag der Anmeldung: 05.10.2022
(60) Teilanmeldung: 22191945.9
(73) Patentinhaber: Siemens Aktiengesellschaft, 80333 München (DE)
(72) Erfinder: BÜTTNER, Klaus, 97618 Hollstadt (DE); KATZENBERGER, Tobias, 97631 Bad Königshofen STT Untereßfeld (DE); KIRCHNER, Klaus, 97645 Ostheim (DE); PLOCHMANN, Bastian, 91413 Neustadt an der Aisch (DE); WARMUTH, Matthias, 97618 Windshausen (DE)
(74) Vertreter: Siemens Patent Attorneys
(86) Internationale Anmeldenummer: PCT/EP2021/050569
(87) Internationale Veröffentlichungsnummer: WO 2021/170307

(56) Entgegenhaltungen:
- EP-A2- 0 509 366
- WO-A2-2012/052928
- DE-A1-102017 001 939
- DE-B- 1 212 204
- US-A- 4 344 006

## Beschreibung

Die Erfindung betrifft ein Verfahren zum Imprägnieren, Verfestigen oder Elektroisolieren eines ein- oder mehrlagige Wicklungen tragenden Körpers.

Die DE 10 2013 017 299 A1 betrifft ein Verfahren zum Imprägnieren, Verfestigen oder Elektroisolieren eines ein- oder mehrlagige Wicklungen tragenden Körpers, insbesondere für einen elektrischen Motor/Generator oder Transformator, wobei der die Wicklungen tragende Körper unter Temperatureinfluss in ein Harz oder einen Lack getaucht oder mit Harz oder mit Lack beträufelt wird, wobei vor und/oder während und/oder nach dem Tränken oder Träufeln der Körper und/oder die von diesem getragenen Wicklungen in einem lokal begrenzten Raumbereich induktiv erwärmt wird.

Zur Träufelharzimprägnierung von hauptsächlich elektrische Wicklungen oder sonstige elektrische Elemente enthaltenden Komponenten, Elektromotoren u. dgl. wird in EP 0 509 366 A2 vorgeschlagen, härterfreies Träufelkunstharz separat aus einer Austrittsöffnung austreten zu lassen und den auf das zu imprägnierende Objekt fließenden Strahl vor seinem Auftreffen mit Härter zu versehen, diesen beispielsweise auf die Strahloberfläche des fließenden Träufelharzes aufzusprühen, so daß mit Härter versetztes Träufelharz ausschließlich das zu imprägnierende Objekt berührt und sonst mit keinem Gegenstand in Verbindung tritt.

Die Erfindung in DE 10 2017 001 939 A1 betrifft eine Imprägniervorrichtung zur Träufelimprägnierung eines Stators oder Ankers einer Elektromaschine mit einem unter Temperaturerhöhung aushärtenden Kunstharz, aufweisend eine in Bezug zur Horizontalen vertikal kippbare Haltevorrichtung, an welcher ein Antriebsmotor als Rotationsantrieb für den Stator (2) oder Anker befestigt ist, eine mit dem Antriebsmotor antriebswirksam verbundene Antriebswelle, eine mit der Antriebswelle drehfest verbundene Einspannvorrichtung, mittels welcher der Stator oder Anker mit der Antriebswelle lösbar verbindbar ist, eine Träufelvorrichtung, mittels der ein Kunstharz auf zumindest ein axiales Ende der Wicklungen des Stators oder Ankers leitbar ist, und eine Heizvorrichtung, mittels welcher die Wicklungen des Stators oder Ankers auf eine Träufeltemperatur sowie auf eine im Vergleich dazu höhere Aushärtetemperatur aufheizbar sind. Die Heizvorrichtung weist erfindungsgemäß einen elektromagnetischen Induktor auf, welcher koaxial oder achsparallel zum Stator oder Anker angeordnet ist. Außerdem betrifft die Erfindung eine Fertigungsanlage zur Träufelimprägnierung eines Stators oder Ankers, in der diese Imprägniervorrichtung integriert ist.

DE 1 212 204 B offenbart ein Verfahren zum Imprägnieren von Ein- und Mehrphasen-Statorwicklungen sowie eine Vorrichtung zur Ausübung des Verfahrens.

DE 35 41 235 A1 beschreibt ein Verfahren zum Überziehen, Imprägnieren von Maschinenteilen, vorzugsweise elektrischen Maschinen, mit Isolationslack. Dabei wird ein mit einem Isolationssystem versehenes Maschinenteil bei Raumtemperatur, vorzugsweise in einem Temperaturbereich von 15- 40° C, unter atmosphärischem Druck, gegebenenfalls unter Vakuum, gegebenenfalls unter Druck, in wasserlöslichem Lack mit einem pH-Wert von 7-11, vorzugsweise 7-8, und einer Effusion von 20-150, vorzugsweise 35-55 (bei 20° C und Mp-4 gemessen), solange eingetaucht, bis eine Blasenbildung an der Lackoberfläche nicht mehr wahrgenommen wird. Danach werden das Maschinenteil aus dem Lack herausgehoben, um den Lack abtropfen zu lassen und unter atmosphärischem Druck oder Vakuum bei einer Temperatur von 15- 80° C, vorzugsweise 25-40° C, getrocknet. Daran anschließend wird der Lack bei einer für den jeweiligen Lack vorgeschriebenen Temperatur eingebrannt.

JP S57 28319 A offenbart eine Imprägnierung von Statorwicklungen mit einem Umgebungstemperatur aufweisenden Harz-Härter-Gemisch. Dabei wird aufgrund der Energieeffizienz auf ein Heizen verzichtet.

DE 196 48 134 A1 betrifft ein Verfahren zur Imprägnierung von Bauteilen mit polymerisierbaren Massen, wobei Bauteil und Tränkmittel eine Raumtemperatur von 26° C aufweisen. Das verwendete Gemisch ist ebenfalls ein mehrkomponentiges Harzsystem.

Eine Herstellung elektrischer Maschinen, beispielsweise Motoren, gelingt meist mit mehreren Fertigungsschritten. Ein Stator wird z. B. nach einem Einziehen von Wicklungen und einem Einbringen von Phasentrennern, Nutisolation und Nutverschluss einem Imprägnierverfahren unterzogen, welches herkömmlicherweise mittels eines heißhärtenden Imprägnierharzes bewerkstelligt wird.

Insbesondere im Bereich kleinerer Motoren wird häufig ein Imprägnierverfahren angewendet, bei welchem der Motor durch ein Harz aufweisendes Becken, auch Harzbecken genannt, gezogen wird. Kleinere Motoren sind hierbei beispielsweise Motoren mit einer Achshöhe 63 bis hin zu einer Achshöhe 160, wobei die Achshöhe das Maß vom Motorstandfuß bis zur Mitte einer Rotationsachse in mm ist.

Ein anschließendes Härten in einem Heißluftofen über mehrere Stunden ist energieintensiv, zeitaufwändig und hat oft Lufteinschlüsse und Fehlstellen im ausgehärteten Harz zur Folge.

Insbesondere größere Motoren - beispielsweise von Achshöhe 180 bis Achshöhe 355 - mit höheren Anforderungen werden mittels eines Verfahrens imprägniert, bei welchem der Stator durch Joulsche Erwärmung vorgeheizt und im Anschluss daran in das Harzbecken getaucht wird. Im eingetauchten Zustand wird der Stator weiterhin durch Strom beheizt, wodurch es zur Gelierung des Harzes in den Nuten und im Wickelkopf kommt. Die Härtung geschieht im Anschluss ebenfalls durch Stromeintrag in die Wicklung und einer oberflächlichen Trocknung mittels UV-Strahlung. Der Stator wird auf min. 150°C aufgeheizt. Im Anschluss kühlt der Stator, der oftmals mehrere hundert Kilogramm schwer ist, aufgrund der hohen Wärmekapazität nur sehr träge in ca. 24 Stunden ab. Eine Weiterarbeit (z.B. Anbringung eines Lagerschildes) ist, insbesondere aufgrund thermischer Ausdehnungskoeffizienten, erst wieder bei Raumtemperatur möglich, wodurch entweder eine aktive Kühlung notwendig ist oder eine Verzögerung unter Nutzung von Lagerfläche aufgrund der Abkühlzeit bei Raumtemperatur in Kauf genommen werden muss.

Die der Erfindung zugrunde liegende Aufgabe kann darin gesehen werden, die Herstellung elektrischer Maschinen zeit- und energieeffizienter zu gestalten.

Die Lösung der Aufgabe gelingt durch ein Verfahren zum Imprägnieren, Verfestigen oder Elektroisolieren eines ein- oder mehrlagige Wicklungen tragenden Körpers, insbesondere für eine elektrische Maschine, mit den in Anspruch 1 angegebenen Merkmalen.

Im Folgenden wird dieses Verfahren auch in abgekürzter Schreibweise als Imprägnierverfahren bezeichnet.

Die Lösung der Aufgabe gelingt ferner durch Anspruch 8, d. h. eine elektrische Maschine, insbesondere ein Motor, Generator oder Transformator, wird nach dem oben genannten Verfahren imprägniert, verfestigt oder elektroisoliert.

In einer vorteilhaften Ausführungsform der Erfindung wird der die Wicklungen tragende Körper bei Raumtemperatur in das mehrkomponentige Harzsystem getaucht oder mit dem mehrkomponentigen Harzsystem beträufelt oder mit dem mehrkomponentigen Harzsystem besprüht.

Der Körper ist vorteilhaft ein Motor oder Generator oder ein Transformator. Der Motor/Generator weist vorteilhaft einen Rotor und einen Stator auf.

Der Körper kann auch ein Stator oder ein Rotor sein.

Vorteilhaft wird der die Wicklungen tragende Körper bei einer Umgebungstemperatur von 15 bis 25°C, insbesondere 20 bis 23°C, in das mehrkomponentige Harzsystem getaucht oder mit dem mehrkomponentigen Harzsystem beträufelt oder mit dem mehrkomponentigen Harzsystem besprüht.

In einer vorteilhaften Ausführungsform der Erfindung wird der die Wicklungen tragende Körper auf eine Temperatur von 30 bis 80°C, insbesondere 30 bis 60°C, vorgewärmt. Vorzugsweise wird der die Wicklungen tragende Körper auf eine Temperatur von 30 bis 80°C, insbesondere 30 bis 60°C, induktiv vorgewärmt. Dies hat den Vorteil, dass unterschiedliche Umgebungstemperaturen, z. B. im Sommer oder Winter, keinen Einfluss auf das Imprägnieren, Verfestigen oder Elektroisolieren haben.

Der die Wicklungen tragende Körper weist umgebungstemperaturunabhängig zu Beginn des Verfahrens zur Imprägnierung, Verfestigung oder Elektroisolierung eine definierte Temperatur auf und kühlt dann ab.

Bei der Erfindung weist das mehrkomponentige Harzsystem wenigstens zwei Komponenten auf, wobei eine erste Komponente ein Harz ist, wobei eine zweite Komponente ein Härter ist.

Ein erstes, nicht erfindungsgemäßes Beispiel: Die erste Komponente, insbesondere ein Harz, weist vorzugsweise eine Viskosität von 2000 bis 2500 mPa·s bei einer Umgebungstemperatur von 25°C auf und eine Dichte von 1,13 bis 1,17 g/ml bei einer Umgebungstemperatur von 20°C. Die zweite Komponente, insbesondere ein Härter, weist vorzugsweise eine Viskosität von 40 bis 60 mPa·s, insbesondere 50 mPa·s, bei einer Umgebungstemperatur von 25°C auf und eine Dichte von 0,98 bis 1,00 g/ml bei einer Umgebungstemperatur von 20°C. Ein Teile-nach-Gewicht-Mischungsverhältnis liegt vorteilhaft bei 100 Teilen Harz zu 20 Teilen Härter. Ein Teile-nach-Volumen-Mischungsverhältnis liegt vorteilhaft bei 100 Teilen Harz zu 23 Teilen Härter. Eine Tropfzeit bei Raumtemperatur für 100 g des gemischten Materials liegt vorteilhaft zwischen 20 und 40 min, vorzugsweise 30 min.

Ein zweites erfindungsgemäßes Beispiel: Die erste Komponente, die ein Harz ist, weist eine Viskosität von 2400 bis 2600 mPa·s, 2500 mPa·s, bei einer Umgebungstemperatur von 25°C auf und ein spezifisches Gewicht von 1,13 bis 1,17 g/cm³, insbesondere 1,15 g/cm³. Die zweite Komponente, die ein Härter ist, weist eine Viskosität von 200 bis 300 mPa·s bei einer Umgebungstemperatur von 25°C auf und ein spezifisches Gewicht von 1,00 bis 1,04 g/cm³, insbesondere 1,02 g/cm³. Ein Teile-nach-Gewicht-Mischungsverhältnis liegt bei 5 Teilen Harz zu 1 Teil Härter. Ein Teile-nach-Volumen-Mischungsverhältnis liegt bei 4,3 Teilen Harz zu 1 Teil Härter. Das gemischte Material weist eine Viskosität von 1550 bis 1750 mPa·s, 1650 mPa·s, bei einer Umgebungstemperatur von 25°C auf und ein spezifisches Gewicht von 1,11 bis 1,15 g/cm³, insbesondere 1,13 g/cm³. Eine Gelierzeit bei 25°C liegt vorteilhaft zwischen 25 und 45 min, vorzugsweise 35 min.

Das mehrkomponentige Harzsystem ist vorzugsweise hochreaktiv. Das mehrkomponentige Harzsystem ist ein 2K-Harzsystem.

Vorzugsweise weist die zweite Komponente eine Viskosität von 40 bis 300 mPa·s bei einer Umgebungstemperatur von 25°C auf.

In einer weiteren vorteilhaften Ausführungsform der Erfindung ist das Harz ein Epoxidharz, wobei der Härter ein Härter auf Aminbasis ist.

Der Amin basierte Härter bringt den Vorteil mit sich, dass die Aushärtung erfolgt bei Zimmertemperatur erfolgen kann, auch Kalthärtung genannt. Epoxidharz ist aufgrund seiner ausgeprägten mechanischen Eigenschaften vorteilhaft und hat nur eine kleine Volumenänderung während des Aushärtens zur Folge. Epoxidharz beinhaltet vorteilhaft keine Lösemittel und weist ein VOC < 1% auf (volatile organic compounds, kurz VOC), d.h. es dampfen weniger als 1 gew.-% des gesamten Materials im Laufe des Härtungsvorgangs ab.

In einer weiteren vorteilhaften Ausführungsform rotiert der Körper um eine Achse, wenn der Körper in ein mehrkomponentiges Harzsystem getaucht wird oder mit dem mehrkomponentigen Harzsystem beträufelt wird oder mit dem mehrkomponentigen Harzsystem besprüht wird.

Vorteilhaft befindet sich der Körper auf einer Rollier-Station.

Gemäß der Erfindung werden die erste Komponente und die zweite Komponente getrennt voneinander gefördert, wobei die erste Komponente und die zweite Komponente unmittelbar vor dem Tauchen oder vor der Beträufelung oder vor der Besprühung zum mehrkomponentigen Harzsystem vermischt werden.

Unmittelbar bedeutet vorzugsweise: max. 10 min.

Durch die Rotation des Körpers wird ein Abtropfen des Harzsystems, insbesondere des Harzes, verhindert. Durch vorhandene Kapillarkräfte wird das Harz in die Nuten gezogen und geliert dort innerhalb weniger Minuten. Eine Tropffreiheit soll nach max. 20 min erreicht sein. Der Körper kann ohne lange aushärten und/oder abkühlen zu müssen, von der Rollier-Station entnommen werden und weiterbearbeitet werden.

In einer weiteren vorteilhaften Ausführungsform der Erfindung weist das mehrkomponentige Harzsystem eine Viskosität von 300 mPa·s bei 25°C auf.

Diese Viskosität beschreibt eine Anfangsviskosität bei 25°C. Da der Körper auf 30 bis 80°C, insbesondere 30 bis 60°C erwärmt wurde, ist die tatsächliche Viskosität geringer.

Vorteilhaft beim Mischen der ersten und zweiten Komponente ist eine nur geringe Viskositätsdifferenz. Ein dynamisches Mischrohr erlaubt hierbei eine größere Viskositätsdifferenz als ein statisches Mischrohr.

In einer weiteren vorteilhaften Ausführungsform der Erfindung weist das mehrkomponentige Harzsystem nach einer Zeitspanne von 20 bis 30 min nach dem Auftreffen auf den Körper eine Viskosität von 15000 mPa·s auf.

Gemäß der Erfindung wird das mehrkomponentige Harzsystem zur Beträufelung als Strahl mit einer Dosierung zwischen 0,2 ml/s und 2 ml/s geformt.

Die genannte Dosierung ist vorteilhaft, da dadurch das Harzsystem optimal gefördert werden kann. Die genannte Dosierung ist zudem vorteilhaft, da dadurch das Harzsystem optimal über Kapillarkräfte in die Wicklung gezogen werden kann.

In einer weiteren vorteilhaften Ausführungsform er Erfindung ist das mehrkomponentige Harzsystem bei einer Umgebungstemperatur von 15 bis 25 °C, insbesondere 20 bis 23 °C, nach weniger als 100 h, vorzugsweise weniger als 72 h, zu wenigstens 95%, vorzugsweise wenigstens 97%, ausgehärtet.

Das mehrkomponentige Harzsystem härtet vorzugsweise ohne den aktiven Eintrag von Wärme aus.

Bei Raumtemperatur ist das mehrkomponentige Harzsystem vorzugsweise nach 24 h zu min 97% ausgehärtet.

Die Erfindung bietet den Vorteil, dass eine Weiterarbeit (z.B. Anbringung eines Lagerschildes), welche aufgrund thermischer Ausdehnungskoeffizienten erst bei Raumtemperatur möglich ist, zeitnah nach der Imprägnierung durchgeführt werden kann. Es ist keine aktive Kühlung notwendig. Ferner muss auch keine Verzögerung unter Nutzung von Lagerfläche aufgrund einer Abkühlzeit bei Raumtemperatur in Kauf genommen werden. Eine kosten- und zeiteffiziente Fertigung ist somit möglich.

Zudem entfällt der eingangs erwähnte hohe Energieverbrauch zum Aufheizen der Wicklung mit Strömen von beispielsweise mehr als 500 A. Zur Steuerung dieser Ströme ist zudem eine sehr aufwendige Leistungselektronik in einer Fertigungsanlage erforderlich. Auch dies entfällt durch die Erfindung.

Die Erfindung bietet ferner den Vorteil, dass in einer Fertigungshalle keine Flächen bereitgestellt werden müssen, auf welchen die imprägnierten Körper über oftmals mehrere Tage oder sogar Wochen abkühlen und aushärten. Dies hat positive wirtschaftliche Effekte zur Folge.

Ein weiterer Vorteil der Erfindung ist, dass kein Harz in Harzbecken vorgehalten werden muss, bei welchem immer die Gefahr einer unerwünschten Gelierung besteht.

Es ist ferner denkbar, dass zur Imprägnierung, Verfestigung oder Elektroisolierung ein 3K-Harzsystem eingesetzt wird. Additive zu einer, vorzugsweis zeitverzögerten, Thixotropierung können einen viskositätserhöhenden Effekt im Hinblick auf eine Gelierung beschleunigen. Dies hat eine Steigerung einer Fertigungseffizienz zur Folge, insbesondere im Hinblick auf eine Taktzeit.

Im Folgenden wird die Erfindung anhand der in den Figuren gezeigten Ausführungsbeispiele näher beschrieben und erläutert. Es zeigen:
- FIG 1: das Imprägnierverfahren,
- FIG 2: eine beispielhafte Anlage zur Durchführung des Imprägnierverfahrens und
- FIG 3: eine dynamoelektrische rotatorische Maschine während des Imprägnierverfahrens.

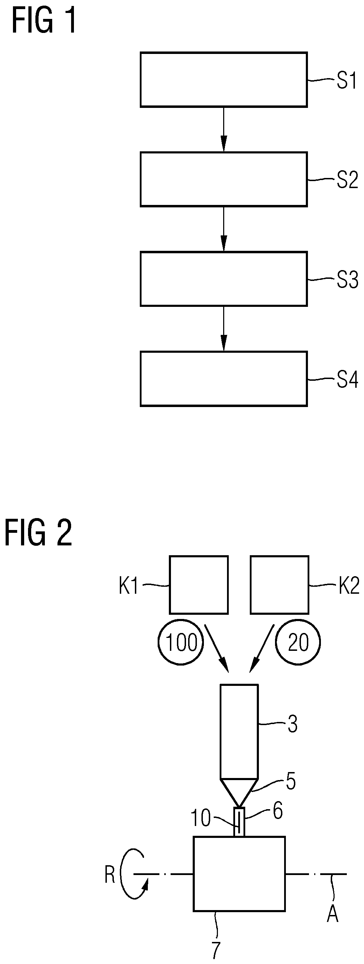

FIG 1 zeigt das Imprägnierverfahren.

In einem ersten Verfahrensschritt werden eine erste Komponente und eine zweite Komponente (Bezugszeichen K1 und K2 in FIG 2) bereitgestellt. Die erste Komponente ist vorzugsweise ein Harz, die zweite Komponente ist vorzugsweise ein Härter.

Die beiden Komponenten werden in einem Verfahrensschritt S2 getrennt gefördert.

In einem Verfahrensschritt S3 werden die beiden Komponenten zu einem mehrkomponentigen Harzsystem (10 in FIG 2), in diesem Fall zweikomponentigen Harzsystem, gemischt und, vorzugsweise unmittelbar nach der Mischung, auf einen Körper (7 in FIG 2) aufgebracht bzw. in den Körper eingebracht.

Es sind auch mehr als zwei Komponenten möglich.

In einem Verfahrensschritt S4 wird durch die Rotation des Körpers das mehrkomponentige Harzsystem in Hohlräumen im Körper verteilt. Ist der Körper beispielsweise ein Stator, wird das mehrkomponentige Harzsystem in den Nuten verteilt.

FIG 2 zeigt eine beispielhafte Anlage zur Durchführung des Imprägnierverfahrens.

Die erste Komponente K1 und die zweite Komponente K2 werden im beispielhaft angegebenen Mischverhältnis 100:20 in einem Mischrohr 3 zum mehrkomponentigen Harzsystem 10 vermischt und als Strahl 6 durch eine Düse 5 auf den Körper 7 ausgegeben. Der Körper rotiert in Rotationsrichtung R um eine Achse A.

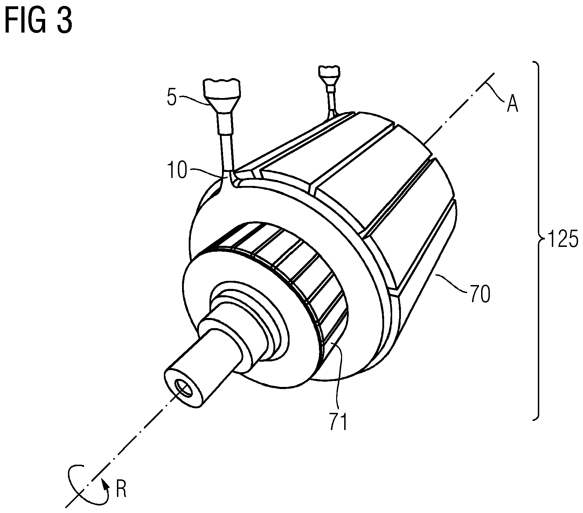

FIG 3 zeigt eine dynamoelektrische rotatorische Maschine 12 während des Imprägnierverfahrens. Die Figur zeigt einen Stator 70 und einen Rotor 71. Durch die Düse 5 trifft das mehrkomponentige Harzsystem 10 in der Figur auf den Stator 70, während der Stator 70 in Rotationsrichtung R um die Achse A rotiert.

Während weiterer Fertigungsschritte sind Rotor und/oder Stator meist erhöhter Temperaturen ausgesetzt. Es folgen z. B. ca. 80°C Wicklungstemperatur beim Aufschrumpfen des 200°C heißen Alu-Gehäuses und eine Kurzschlussprüfung als Endprüfung mit einer frei wählbaren Aufheizung der Wicklung. Eine nahezu 100%ige Härtung des Harzsystems, sofern chemisch überhaupt möglich, ist vor der Fertigstellung gesichert.

Ohne thermische Folgeprozesse ist die Härtung des Harzsystems innerhalb weniger Tage abgeschlossen. Ein Fertigungsfluss wird nicht gestört, da es sich bereits nach wenigen Minuten um ein tropffreies Produkt handelt, welches keine oder einer nur eine geringe Klebrigkeit der Oberfläche aufweist.

Das Imprägnierverfahren bietet viele Vorteile: Eine deutliche Reduktion der Energiekosten, abhängig von Material und Fertigungsfluss kann eine Zykluszeit reduziert werden. Durch den Wegfall der thermischen Prozesse kann die Anlagengröße und benötigte Fläche halbiert werden.

## Patentansprüche

1. Verfahren zum Imprägnieren, Verfestigen oder Elektroisolieren eines ein- oder mehrlagige Wicklungen tragenden Körpers (7), insbesondere für eine elektrische Maschine (12), wobei der die Wicklungen tragende Körper mit dem mehrkomponentigen Harzsystem beträufelt wird,
wobei der die Wicklungen tragende Körper (7) bei einer Umgebungstemperatur von 15 bis 25°C, insbesondere 20 bis 23°C, mit dem mehrkomponentigen Harzsystem beträufelt wird,
wobei das mehrkomponentige Harzsystem (10) wenigstens zwei Komponenten aufweist, wobei eine erste Komponente (K1) ein Harz ist, wobei eine zweite Komponente (K2) ein Härter ist,
wobei die erste Komponente (K1) und die zweite Komponente (K2) getrennt voneinander gefördert werden, wobei die erste Komponente und die zweite Komponente unmittelbar vor der Beträufelung zum mehrkomponentigen Harzsystem (10) vermischt werden,
**dadurch gekennzeichnet, dass**
die erste Komponente eine Viskosität von 2400 bis 2600 mPa·s bei einer Umgebungstemperatur von 25°C und ein spezifisches Gewicht von 1,13 bis 1,17 g/cm³ aufweist
und die zweite Komponente eine Viskosität von 200 bis 300 mPa·s bei einer Umgebungstemperatur von 25°C und ein spezifisches Gewicht von 1,00 bis 1,04 g/cm³ aufweist,
wobei ein Teile-nach-Gewicht-Mischungsverhältnis bei 5 Teilen Harz zu 1 Teil Härter liegt und ein Teile-nach-Volumen-Mischungsverhältnis bei 4,3 Teilen Harz zu 1 Teil Härter liegt,
wobei das gemischte Material eine Viskosität von 1550 bis 1750 mPa·s bei einer Umgebungstemperatur von 25°C und ein spezifisches Gewicht von 1,11 bis 1,15 g/cm³ aufweist,
wobei das mehrkomponentige Harzsystem (10) zur Beträufelung als Strahl (6) mit einer Dosierung zwischen 0,2 ml/s und 2 ml/s geformt wird.

2. Verfahren nach Anspruch 1, wobei der die Wicklungen tragende Körper (7) auf eine Temperatur von 30 bis 80°C vorgewärmt wird, vorzugsweise induktiv vorgewärmt wird.

3. Verfahren nach einem der vorhergehenden Ansprüche, wobei das Harz ein Epoxidharz ist, wobei der Härter ein Härter auf Aminbasis ist.

4. Verfahren nach einem der vorhergehenden Ansprüche, wobei der Körper (7) um eine Achse (A) rotiert, wenn der Körpermit dem mehrkomponentigen Harzsystem beträufelt wird.

5. Verfahren nach einem der vorhergehenden Ansprüche, wobei das mehrkomponentige Harzsystem (10) eine Viskosität von 300 mPa·s bei 25°C aufweist.

6. Verfahren nach einem der vorhergehenden Ansprüche, wobei das mehrkomponentige Harzsystem (10) nach einer Zeitspanne von 20 bis 30 min nach dem Auftreffen auf den Körper (7) eine Viskosität von 15000 mPa·s aufweist.

7. Verfahren nach einem der vorhergehenden Ansprüche, wobei das mehrkomponentige Harzsystem (10) bei einer Umgebungstemperatur von 15 bis 25°C, insbesondere 20 bis 23°C, nach weniger als 100 h, vorzugsweise weniger als 72 h, zu wenigstens 95%, vorzugsweise wenigstens 97%, ausgehärtet ist.

8. Elektrische Maschine (12), insbesondere ein Motor, Generator oder Transformator, imprägniert, verfestigt oder elektroisoliert nach einem Verfahren nach einem der vorhergehenden Ansprüche.

## Claims

1. Method for impregnating, strengthening or electrically insulating a body (7) supporting single or multi-layer windings, in particular for an electric machine (12), wherein the body supporting the windings is sprinkled with the multi-component resin system,
wherein the body (7) supporting the windings, at an ambient temperature of 15 to 25°C, in particular 20 to 23°C, is sprinkled with the multi-component resin system,
wherein the multi-component resin system (10) has at least two components, wherein a first component (K1) is a resin, wherein a second component (K2) is a curing agent,
wherein the first component (K1) and the second component (K2) are conveyed separately from one another, wherein the first component and the second component are mixed to form the multi-component resin system (10) immediately before the sprinkling,
**characterised in that**
the first component has a viscosity of 2400 to 2600 mPa·s at an ambient temperature of 25°C and has a specific weight of 1.13 to 1.17 g/cm³,
and the second component has a viscosity of 200 to 300 mPa·s at an ambient temperature of 25°C and has a specific weight of 1.00 to 1.04 g/cm³,
wherein a "parts by weight" mixing ratio lies at 5 parts resin to 1 part curing agent and a "parts by volume" mixing ratio lies at 4.3 parts resin to 1 parts curing agent,
wherein the mixed material has a viscosity of 1550 to 1750 mPa·s at an ambient temperature of 25°C and has a specific weight of 1.11 to 1.15 g/cm³,
wherein the multi-component resin system (10) is shaped as a jet (6) with a dosing between 0.2 ml/s and 2 ml/s for the purpose of sprinkling.

2. Method according to claim 1, wherein the body (7) supporting the windings is preheated, preferably inductively, to a temperature of 30 to 80°C.

3. Method according to one of the preceding claims, wherein the resin is an epoxy resin, wherein the curing agent is an amine-based curing agent.

4. Method according to one of the preceding claims, wherein the body (7) rotates about an axis (A) when the body is sprinkled with the multi-component resin system.

5. Method according to one of the preceding claims, wherein the multi-component resin system (10) has a viscosity of 300 mPa·s at 25°C.

6. Method according to one of the preceding claims, wherein the multi-component resin system (10) has a viscosity of 15000 mPa·s after a period of time of 20 to 30 min after striking the body (7).

7. Method according to one of the preceding claims, wherein the multi-component resin system (10), at an ambient temperature of 15 to 25°C, in particular 20 to 23°C, is at least 95%, preferably at least 97% cured after less than 100 h, preferably after less than 72 h.

8. Electric machine (12), in particular a motor, generator or transformer, impregnated, strengthened or electrically insulated in accordance with a method according to one of the preceding claims.

## Revendications

1. Procédé d'imprégnation, de consolidation ou d'électroisolisation d'un corps (7) à une couche ou à plusieurs couches portant des enroulements, en particulier pour une machine (12) électrique, dans lequel on verse goutte à goutte le système de résine à plusieurs composants sur le corps portant les enroulements,
dans lequel on verse goutte à goutte le système de résine ayant plusieurs composants sur le corps (7) portant les enroulements à une température ambiante de 15 à 25°C, en particulier de 20 à 23°C, dans lequel le système (10) de résine à plusieurs composants a au moins deux composants, dans lequel un premier composant (K1) est une résine, dans lequel un deuxième composant (K2) est un durcisseur, dans lequel on véhicule séparément l'un de l'autre le premier composant (K1) et le deuxième composant (K2), dans lequel on mélange le premier composant et le deuxième composant en le système (10) de résine à plusieurs composants, juste avant le versement goutte à goutte,
**caractérisé en ce que**
le premier composant a une viscosité à 2400 à 2600 mPa·s à une température ambiante de 25°C et un poids spécifique de 1,13 à 1,17 g/cm³,
et le deuxième composant a une viscosité de 200 à 300 mPa·s à une température ambiante de 25°C et un poids spécifique de 1,01 à 1,04 g/cm³,
dans lequel un rapport de mélange en partie en poids est de 5 parties de résine pour une partie de durcisseur et un rapport de mélange en partie en volume est de 4,3 parties de résine pour 1 partie de durcisseur,
dans lequel la matière mélangée a une viscosité de 1550 à 1750 mPa·s à une température ambiante de 25°C et un poids spécifique de 1,11 à 1,15 g/cm³,
dans lequel on forme le système (10) de résine à plusieurs composants pour le versement goutte à goutte en un jet (6) avec un dosage compris entre 0,2 ml/s et 2 ml/s.

2. Procédé suivant la revendication 1, dans lequel on préchauffe le corps (7) portant les enroulements à une température de 30 à 80°C, en le préchauffant de préférence par induction.

3. Procédé suivant l'une des revendications précédentes, dans lequel la résine est une résine d'époxyde, le durcisseur étant un durcisseur à base d'amine.

4. Procédé suivant l'une des revendications précédentes, dans lequel le corps (7) tourne autour d'un axe (A), lorsque l'on verse goutte à goutte le système de résine à plusieurs composants sur le corps.

5. Procédé suivant l'une des revendications précédentes, dans lequel le système (10) de résine à plusieurs composants a une viscosité de 300 mPa·s à 25°C.

6. Procédé suivant l'une des revendications précédentes, dans lequel le système (10) de résine à plusieurs composants a, après un laps de temps de 20 à 30 min, après l'arrivée sur le corps (7), une viscosité de 15000 mPa·s.

7. Procédé suivant l'une des revendications précédentes, dans lequel le système (10) de résine à plusieurs composants est durci à une température ambiante de 15 à 25°C, en particulier de 20 à 23°C, après moins de 100 h, de préférence moins de 72 h, à au moins 95 %, de préférence à au moins 97 %.

8. Machine (12) électrique, en particulier moteur, générateur ou transformateur imprégné, consolidé ou électroisolé suivant un procédé suivant l'une des revendications précédentes.
